# EUROPEAN PATENT SPECIFICATION

(11) **EP 2 599 308 B1**
(45) Date of publication and mention of the grant of the patent: **13.12.2017**
(21) Application number: 11839484.0
(22) Date of filing: 21.10.2011
(51) Int. Cl.: H04N 19/126, H04N 19/96, H04N 19/176, H04N 19/174, H04N 19/70, H04N 19/463, H04N 19/119

(54) **METHOD AND APPARATUS OF DELTA QUANTIZATION PARAMETER PROCESSING FOR HIGH EFFICIENCY VIDEO CODING**
VERFAHREN UND VORRICHTUNG ZUR DELTA-QUANTISIERUNGSPARAMETERVERARBEITUNG FÜR HOCHEFFIZIENTE VIDEOKODIERUNG
PROCÉDÉ ET APPAREIL DE TRAITEMENT DE PARAMÈTRE DE QUANTIFICATION DELTA POUR UN CODAGE VIDÉO D'UNE GRANDE EFFICACITÉ

(30) Priority: 01.02.2011 US 201113018431; 22.12.2010 US 201061425996 P; 08.11.2010 US 201061411066 P
(43) Date of publication of application: 05.06.2013
(60) Divisional application: 16164435.6
(73) Proprietor: HFI Innovation Inc., Hsinchu County 302 (TW)
(72) Inventor: HUANG, Yu-Wen, Taipei City Taiwan 104 (TW); CHEN, Ching-Yeh, Taipei City Taiwan 115 (TW); FU, Chih-Ming, Hsinchu City Taiwan 300 (TW); HSU, Chih-Wei, Taipei City Taiwan 104 (TW); CHANG, Yu-Lin, Taipei City Taiwan 110 (TW); CHUANG, Tzu-Der, Hsinchu County Taiwan 302 (TW); LEI, Shaw-Min, Hsinchu County Taiwan 302 (TW)
(74) Representative: Hoefer & Partner Patentanwälte mbB
(86) International application number: PCT/CN2011/081108
(87) International publication number: WO 2012/062161

(56) References cited:
- EP-A1- 2 579 594
- EP-A1- 2 624 560
- EP-A2- 2 574 056
- EP-A2- 2 608 540
- WO-A2-2011/140211
- US-A1- 2011 274 162
- T-D CHUANG ET AL: "Quantization: Sub-LCU Delta QP", 20110310, no. JCTVC-E051, 10 March 2011 (2011-03-10) , XP030008557, ISSN: 0000-0007
- BUDAGAVI M ET AL: "Delta QP signaling at sub-LCU level", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-D038, 15 January 2011 (2011-01-15), XP030008079, ISSN: 0000-0015
- DONG L ET AL: "CU Adaptive dQP Syntax Change for Better Decoder pipelining", 95. MPEG MEETING; 24-1-2011 - 28-1-2011; DAEGU; (MOTION PICTURE EXPERT GROUP OR ISO/IEC JTC1/SC29/WG11),, no. m19022, 22 January 2011 (2011-01-22), XP030047590,
- YU-WEN HUANG ET AL: "A Technical Description of MediaTek's Proposal to the JCT-VC CfP", JOINT COLLABORATIVE TEAM ON VIDEO CODING (JCT-VC) OF ITU-T SG16 WP3 AND ISO/IEC JTC1/SC29/WG11, 1ST MEETING: DRESDEN, DE, , no. JCTVC-A109_r2 15 April 2010 (2010-04-15), pages 1-41, XP002664256, Retrieved from the Internet: URL:http://wftp3.itu.int/av-arch/jctvc-sit e/2010_04_A_Dresden/JCTVC-A109.zip
- SATO (SONY) K: "Proposal on large block structure and quantization", 3. JCT-VC MEETING; 94. MPEG MEETING; 7-10-2010 - 15-10-2010;GUANGZHOU; (JOINT COLLABORATIVE TEAM ON VIDEO CODING OF ISO/IECJTC1/SC29/WG11 AND ITU-T SG.16 ); URL: HTTP://WFTP3.ITU.INT/AV-ARCH/JCTVC-SITE/,, no. JCTVC-C167, 2 October 2010 (2010-10-02), XP030007874, ISSN: 0000-0045
- ANONYMOUS: "Test Model under Consideration", 2. JCT-VC MEETING; 21-7-2010 - 28-7-2010; GENEVA; (JOINT COLLABORATIVETEAM ON VIDEO CODING OF ISO/IEC JTC1/SC29/WG11 AND ITU-T SG.16 ); URL:HTTP://WFTP3.ITU.INT/AV-ARCH/JCTVC-SIT E/,, no. JCTVC-B205, 28 July 2010 (2010-07-28), XP030007704, ISSN: 0000-0046
- PANG C ET AL: "Sub-LCU QP representation", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-E436, 13 March 2011 (2011-03-13) , XP030008942, ISSN: 0000-0005
- KAZUSHI SATO ET AL: "Preliminary Implementation on Sub-LCU-Level DeltaQP", 20110314, no. JCTVC-E220, 14 March 2011 (2011-03-14) , XP030008726, ISSN: 0000-0007
- MUHAMMED COBAN ET AL: "CU-Level QP Prediction", 96. MPEG MEETING; 21-3-2011 - 25-3-2011; GENEVA; (MOTION PICTURE EXPERT GROUP OR ISO/IEC JTC1/SC29/WG11),, no. m19927, 19 March 2011 (2011-03-19), XP030048494,
- 'AhG Quantization: Sub-LCU Delta QP, JCTVC-E051' JCT-VC 5TH MEETING, [Online] 23 March 2011, page 2, XP055082229 Retrieved from the Internet: <URL:http://wftp3.itu.int/av-arch/ jctvc-site/ 2011_03_E_Geneva/JCTVC-E051-v4.zip>
- 'Delta QP signaling at sub-LCU level, JCTVC-D038' JCT-VC 4TH MEETING, [Online] 28 January 2011, page 2, XP030047355 Retrieved from the Internet: <URL:http://wftp3.itu.int/av-arch/jctvc-sit e/ 2011_01_D_Daegu/JCTVC-D038-v2.zip>
- 'A Technical Description ofMediaTek's Proposal to the JCT-VC CfP, JCTVC-A109' JCT-VC 1ST MEETING, [Online] 23 April 2010, page 3,9, XP002664256 Retrieved from the Internet: <URL:http://wftp3 .itu.int/av-arch/jctvc-site/2010_04_A_Dresd en/JCTVC-A109.zip>
- 'Proposal on Large Block Structure and Quantization JCTVC-C167' JCT-VC 3RD MEETING, [Online] 15 October 2010, pages 1 - 8, XP030007874 Retrieved from the Internet: <URL:http://wftp3.itu.int/av-arch/ ctvc-site/2010_10_C_Guangzhou/JCTVC-C167.do c>
- 'TEST MODEL UNDER CONSIDERATION, JCTVC -B205' JCT-VC 2ND MEETING, [Online] 28 July 2010, pages 128 - 132, XP008169132 Retrieved from the Internet: <URL:http://wftp3.itu.int/av-arch/ jctvc-site/ 2010_07_B_Geneva/JCTVC-B205_draft001.doc>

## Description

### CROSS REFERENCE TO RELATED APPLICATIONS

The present invention claims priority U.S. Provisional Patent Application, No. 61/411,066, filed November 8, 2010, entitled "Delta Quantization Parameter for High Efficiency Video Coding (HEVC)".

### FIELD OF INVENTION

The present invention relates to video coding. In particular, the present invention relates to coding techniques associated with quantization parameter processing.

### BACKGROUND OF THE INVENTION

HEVC (High Efficiency Video Coding) is an advanced video coding system being developed under the Joint Collaborative Team on Video Coding (JCT-VC) group of video coding experts from ITU-T Study Group. HEVC is block-based hybrid video coding with very flexible block structure. Three block concepts are introduced in HEVC: coding unit (CU), prediction unit (PU), and transform unit (TU). The overall coding structure is characterized by the various sizes of CU, PU and TU in a recursive fashion, where each picture is divided into largest CUs (LCUs) consisting of 64x64 pixels. Each LCU is then recursively divided into smaller CUs until leaf CUs or smallest CUs are reached. Once the splitting of CU hierarchical tree is done, each leaf CU is subject to further split into prediction units (PUs) according to prediction type and PU partition. Furthermore, transform is applied to TUs to transform spatial data into transform coefficients for compact data representation. In the H.264 coding standard, the underlying video frames are divided into slices, where each slice consists of nonoverlapping macroblocks as the smallest coding unit. Since the slice is independently processed, errors or missing data from one slice cannot propagate to any other slice within the picture. In the recent HEVC development, the slice contains multiple LCUs instead of macroblocks. The LCU size is much larger than the macroblock size of 16×16 pixels. Therefore, the LCU-aligned slice of HEVC does not provide enough granularities for dividing video frames and bit rate control. While the LCU-aligned slice is used by HEVC, it is also possible to use non-LCU aligned slices. The non-LCU aligned slice provides more flexible slice structure and finer granular rate control.

In HEVC, each LCU has its own quantization parameter (QP) and the QP selected for the LCU is conveyed to the decoder side so that the decoder will use the same QP value for proper decoding process. In order to reduce information associated with QP, the difference between the current coding QP and the reference QP is transmitted instead of the QP value itself. The reference QP can be derived in different ways. For example, in H.264, the reference QP is derived base on previous macroblock; while in HEVC, the reference QP is the QP specified in the slice header. Comparing with the macroblock-based coding of AVC/H.264, the coding unit for HEVC can be as large as 64x64 pixels, i.e., the largest CU (LCU). Since the LCU is much larger than the macroblock of AVC/H.264, using one delta QP per LCU may cause rate control unable to adapt to the bitrate quickly enough. Consequently there is a need to adopt delta QP in units smaller than LCU to provide more granular rate control. Furthermore, it is desirable to develop a system that is capable of facilitating more flexible and/or adaptive delta QP processing.

The publication "A technical description of MediaTek's proposal to the JCT-VC CfP" by Yu-Wen Huang et al. discloses tools for coding and encoding video pictures, wherein quantization parameter for an INTRA_16x16 scheme are sent, when a coded block pattern is non-zero.

The further publication "Proposal on large block structure and quantization" by Kazushi Sato discloses a high efficiency video coding scheme, wherein a coding unit syntax is defined such that quantization parameters can be exchanged not only on a level of largest coding units (LCU) but on all CU levels.

Prior art document EP 2 624 560 A1 discloses an image decoding method, an image encoding method, an image decoding device, an image encoding device, a program and an integrated circuit having capabilities for improving image quality in coding efficiency, wherein a hierarchical layer is specified for storing a parameter for decoding a processing unit.

Document EP 2 608 548 to describes a method and an apparatus for encoding video as well as a decoding method and an apparatus therefor which are configured for decoding and setting quantization parameters, wherein blocks having various sizes and depth are involved as an coding and decoding units.

Document WO 2011/140211 A2 refers to coding unit quantization parameters in video coding wherein coded largest coding units and its decoding are based on a coded coding unit structure and a plurality of coded quantization parameters.

Prior art document EP 2 574 056 A2 concerns an image encoding and/or decoding device and method wherein a video is reconstructed based on a reconstructed residual block which is based on a reconstructed differential value of a quantization parameter.

Document EP 2 579 594 A1 discloses an image processing device and method which are configured in order to perform a quantization process or an inverse quantization process more suitable for the content of an image.

It is an object underlying the present invention to provide methods for coding and for decoding video pictures which have an improved efficiency.

### SUMMARY OF THE INVENTION

The object is achieved by a method for coding of video pictures according to independent claim 1 and by a method for decoding a video bit stream corresponding to video pictures according to independent claim 8. Preferred embodiments are defined in the respective dependent claims.

An apparatus and method for coding of video pictures associated with quantization parameter are disclosed. In one embodiment according to the present invention, the apparatus and method for video coding comprises steps of receiving a leaf CU, determining a QP minimum CU size to transmit quantization parameter information, and incorporating the quantization parameter information if leaf CU size is larger than or equal to the QP minimum CU size. The QP minimum CU size may be indicated in the sequence level, picture level, or slice level, where a QP selection flag may be used to select the QP minimum CU size indication in the slice level or the sequence/picture level. In an alternative embodiment according to the present invention, the method further comprises a step of incorporating second quantization parameter information for at least two second leaf CUs to share the second quantization parameter information if said at least two second leaf CUs are smaller than the QP minimum CU size and parent CU size of said at least two second leaf CUs is equal to the QP minimum CU size. In yet another embodiment according to the present invention, the method further comprises a step of incorporating third quantization parameter information for a third leaf CU regardless of the size of the third leaf CU if the third leaf CU is the first one of coding units in a slice.

An apparatus and method for decoding of a video bit stream associated with adaptive quantization parameter processing are disclosed. In one embodiment according to the present
invention, the apparatus and method for decoding of a video bitstream comprises receiving the video bitstream, determining a QP minimum CU size from the video bitstream, determining size of a leaf CU from the video bitstream and obtaining quantization parameter information for the leaf CU if the size of the leaf CU is larger than or equal to the QP minimum CU size. In an alternative embodiment according to the present invention, the method further comprises a step of obtaining second quantization parameter information for at least two second leaf CUs to share the second quantization parameter information if said at least two second leaf CUs are smaller than the QP minimum CU size and parent CU size of said at least two second leaf CUs is equal to the QP minimum CU size. In yet another embodiment according to the present invention, the method comprises a step of obtaining third quantization parameter information for a third leaf CU regardless of the size of the third leaf CU if the third leaf CU is the first one of coding units in a slice.

An apparatus and method for coding of video pictures associated with quantization parameter are disclosed. In the following disclosure, LCU-aligned slices are used as an example to illustrate the delta-QP processing according to the present invention. As for non-LCU-aligned slices, the related operations of the first leaf CU of the slice can be handled similarly. In one embodiment according to the present invention, the apparatus and method for video coding comprises steps of receiving a leaf CU, determining a QP minimum CU size to transmit quantization parameter information for the leaf CU and incorporating the quantization parameter information if leaf CU size is larger than or equal to the QP minimum CU size and the leaf CU has at least one nonzero quantized transform coefficient. In an alternative embodiment according to the present invention, the method further comprises incorporating second quantization parameter information for at least two second leaf CUs to share the second quantization parameter information if said at least two second leaf CUs are smaller than the QP minimum CU size, parent CU size of said at least two second leaf CUs is equal to the QP minimum CU size, and said at least two second leaf CUs have at least one second nonzero quantized transform coefficient. Detection of nonzero quantized transform coefficient can be based on PredMode, CBP, CBF, or a combination of PredMode, CBP, and CBF. An apparatus and method for decoding of a video bitstream associated with adaptive quantization parameter processing are disclosed. In one embodiment according to the present invention, the apparatus and method for decoding of a video bitstream comprises receiving the video bitstream, determining a QP minimum CU size from the video bitstream, and determining leaf CU size for a leaf CU from the video bitstream. If the leaf CU size is larger than or equal to the QP minimum CU size, detecting whether the leaf CU has at least one nonzero quantized transform coefficient. If the leaf CU has at least one nonzero quantized transform coefficient, obtaining quantization parameter information for the leaf CU.

An apparatus and method for coding of video pictures associated with quantization parameter are disclosed. In one embodiment according to the present invention, the apparatus and method for video coding comprises steps of receiving a leaf CU and incorporating quantization parameter information for the leaf CU if the leaf CU has at least one nonzero quantized transform coefficient, wherein said at least one nonzero quantized transform coefficient is detected based on PredMode, CBP, CBF, or a combination of PredMode, CBP, and CBF. The way of incorporating quantization parameter information for leaf CU which has at least one nonzero quantized transform coefficient can be explicit or implicit. For example, the quantization parameter information is directly transmitted in the video bitstream in an explicit way; or the quantization parameter information is derived from the information of at least another leaf CU such as quantization parameter information, PredMode, CBF, CBP, leaf CU position, or a combination of the above, in an implicit way. An apparatus and method for decoding of a video bitstream associated with adaptive quantization parameter processing are disclosed. In one embodiment according to the present invention, the apparatus and method for decoding of a video bitstream comprises receiving the video bitstream and detecting whether the leaf CU has at least one nonzero quantized transform coefficient. If the leaf CU has at least one nonzero quantized transform coefficient, obtaining quantization parameter information for the leaf CU. The quantization parameter information can be obtained in explicit or implicit way, for example, the quantization parameter information can be obtained from the video bitstream or can be derived from information of at least another leaf CU.

An apparatus and method for coding of video pictures associated with quantization parameter are disclosed. In one embodiment according to the present invention, the apparatus and method for video coding comprises steps of receiving a leaf CU, incorporating a Largest Coding Unit (LCU) based QP flag according to a performance criterion, incorporating quantization parameter information for an LCU if LCU based QP is selected as indicated by the LCU based QP flag and the LCU contains at least one nonzero quantized transform coefficient, and incorporating the quantization parameter information for the leaf CU if non-LCU based QP is selected as indicated by the LCU based QP flag and the leaf CU contains said at least one nonzero quantized transform coefficient. An apparatus and method for decoding of a video bitstream associated with adaptive quantization parameter processing are disclosed. In one embodiment according to the present invention, the apparatus and method for decoding of a video bitstream comprises receiving the video bitstream and extracting an LCU based QP flag from the video bitstream. If LCU based QP is selected as indicated by the LCU based QP flag, the method further comprises a step of obtaining quantization parameter information for each LCU. If non-LCU based QP is selected as indicated by the LCU based QP flag, the method further comprises a step of obtaining quantization parameter information for each leaf CU.

### BRIEF DESCRIPTION OF THE DRAWINGS

Fig. 1 illustrates an exemplary coding unit partition based on the quadtree.
Fig. 2 illustrates an example of slice partition where the partition boundaries are aligned with the largest coding unit.
Fig. 3 illustrates an example of slice partition where the slices may include fractional largest coding units.
Fig. 4 illustrates an exemplary sequence header syntax associated with delta quantization parameter processing according to the present invention.
Fig. 5 illustrates an exemplary slice header syntax associated with delta quantization parameter processing according to the present invention.
Fig. 6 illustrates an exemplary slice data syntax associated with delta quantization parameter processing according to the present invention.
Fig. 7A illustrates an exemplary coding unit syntax associated with delta quantization parameter processing according to the present invention.
Fig. 7B illustrates the remaining portion of the exemplary coding unit syntax associated with delta quantization parameter processing according to the present invention.
Fig. 8 illustrates an alternative example of slice data syntax associated with delta quantization parameter processing according to the present invention.
Fig. 9A illustrates an alternative example of coding unit syntax associated with delta quantization parameter processing according to the present invention.
Fig. 9B illustrates the remaining portion of the alternative example of coding unit syntax associated with delta quantization parameter processing according to the present invention.
Fig. 10 illustrates an example of transform unit syntax associated with delta quantization parameter processing according to the present invention.
Fig. 11 illustrates sequence header syntax based on conventional HEVC for delta quantization parameter processing according to the present invention.
Fig. 12 illustrates slice header syntax based on conventional HEVC for delta quantization parameter processing according to the present invention.
Fig. 13 illustrates slice data syntax based on conventional HEVC for delta quantization parameter processing according to the present invention.
Fig. 14A illustrates coding unit syntax based on conventional HEVC for delta quantization parameter processing according to the present invention.
Fig. 14B illustrates the remaining portion of coding unit syntax based on conventional HEVC for delta quantization parameter processing according to the present invention.
Fig. 15 illustrates an alternative example of transform unit syntax associated with delta quantization parameter processing according to the present invention.
Fig. 16A illustrates another alternative example of coding unit syntax associated with delta quantization parameter processing according to the present invention.
Fig. 16B illustrates the remaining portion of another alternative example of coding unit syntax associated with delta quantization parameter processing according to the present invention.
Fig. 17 illustrates an alternative example of transform unit syntax associated with delta quantization parameter processing according to the present invention.

### DETAILED DESCRIPTION

HEVC (High Efficiency Video Coding) is an advanced video coding system being developed under the Joint Collaborative Team on Video Coding (JCT-VC) group of video coding experts from ITU-T Study Group. HEVC is block-based hybrid video coding with very flexible block structure. Three block concepts are introduced in HEVC: coding unit (CU), prediction unit (PU), and transform unit (TU). The overall coding structure is characterized by the various sizes of CU, PU and TU in a recursive fashion. Each picture is divided into largest CUs (LCUs) consisting of 64x64 pixels and each LCU is then recursively divided into smaller CUs until leaf CUs or smallest CUs are reached. Once the splitting of CU hierarchical tree is done, each leaf CU is subject to further split into prediction units (PUs) according to prediction type and PU partition. In the H.264/AVC standard, one of the new characteristics is the capability of dividing an image into regions called slice. The use of slice provides various potential advantages such as prioritized transmission, error resilient transmission, and etc. While the LCU-aligned slice is used by HEVC, it is also possible to use non-LCU aligned slice. The non-LCU aligned slice provides more flexible slice structure and finer granular rate control.

HEVC is block-based hybrid video coding with very flexible block structure, where coding process is applied to each coding unit. Once the splitting of CU hierarchical tree is done, each leaf CU is subject to further split into prediction units (PUs) according to prediction type and PU partition. Transform is then applied to transform units associated with the prediction residues or the block image data itself. The transform coefficients are then quantized, and the quantized transform coefficients are then processed by entropy coder to reduce information required for representing the video data. Quantization Parameter (QP) is a control parameter that determines the quantization step size and consequently adjusts picture quality and compressed bit rate. In the conventional HEVC, the quantization parameter is adjusted on the LCU basis. Therefore information associated QP is transmitted for each LCU. In order to conserve bit rate associated with transmission of QP, the difference between the current coding QP and the reference QP is used instead of the QP value itself. The difference between the current QP and the reference QP is termed as the delta QP. The reference QP can be derived in different ways. For example, in H.264, the reference QP is typically derived base on previous macroblock; while in HEVC, the reference QP is the QP specified in the slice header.

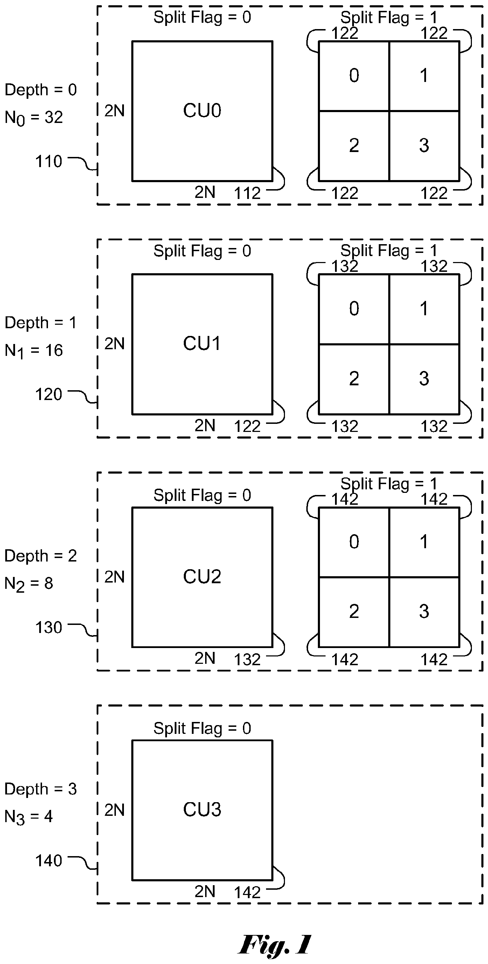

In the high efficiency video coding (HEVC) under development, the fixed-size macroblock of H.264/AVC is replaced by the flexible coding unit. Fig. 1 illustrates an exemplary coding unit partition based on a quadtree. At depth 0, the initial coding unit CU0, 112 consisting of 64×64 pixel, is the largest CU. The initial coding unit CU0, 112 is subject to quadtree split as shown in block 110. A split flag 0 indicates the underlying CU is not split and, on the other hand, a split flag 1 indicates the underlying CU is split into four smaller coding units CU1, 122 by the quadtree. The resulting four coding units are labeled as 0, 1, 2 and 3 and each resulting coding unit can be further split in the next depth. The coding units resulted from coding unit CU0, 112 are referred to as CU1, 122. After a coding unit is split by the quadtree, the resulting coding units are subject to further quadtree split unless the coding unit reaches a pre-specified smallest CU (SCU) size. Consequently, at depth 1, the coding unit CU1, 122 is subject to quadtree split as shown in block 120. Again, a split flag 0 indicates the underlying CU is not split and, on the other hand a split flag 1 indicates the underlying CU is split into four smaller coding units CU2, 132 by the quadtree. The coding unit CU2, 132, has a size of 16×16 and the process of the quadtree splitting as shown in block 130 can continue until a pre-specified smallest coding unit is reached. For example, if the smallest coding unit is chosen to be 8×8, the coding unit CU3, 142 at depth 3 will not be subject to further split as shown in block 140. The collection of quadtree partitions of a picture to form variable-size coding units constitutes a partition map for the encoder to process the input image area accordingly. The partition map has to be conveyed to the decoder so that the decoding process can be performed accordingly.

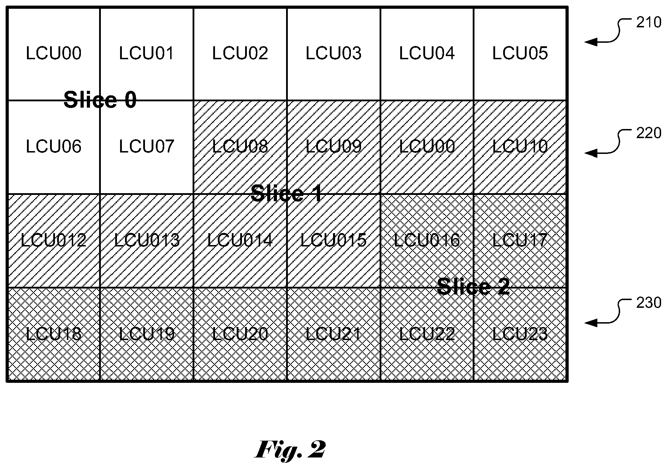

In the high efficiency video coding (HEVC) coding standard being developed, the largest coding unit (LCU) is used as an initial coding unit. The LCU may be adaptively divided into smaller CUs for more efficient processing. The macroblock-based slice partition for H.264 can be extended to the LCU-based slice partition for HEVC. An example of the LCU-based slice partition for HEVC is shown in Fig. 2 where twenty-four LCUs are partitioned into three slices. LCU00 though LCU07 are assigned to slice 0, 210, LCU08 though LCU15 are assigned to slice 1, 220, and LCU16 though LCU23 are assigned to slice 2, 230. As shown in Fig. 2, the slice boundary is aligned with the LCU boundary. While the LCU-aligned slice partition is easy to implement, the size of LCU is much larger than the size of macroblock and the LCU-aligned slice may not be able provide enough granularities to support dynamic environment of coding systems. Therefore, a non-LCU aligned slice partition is being proposed in the HEVC standard development.

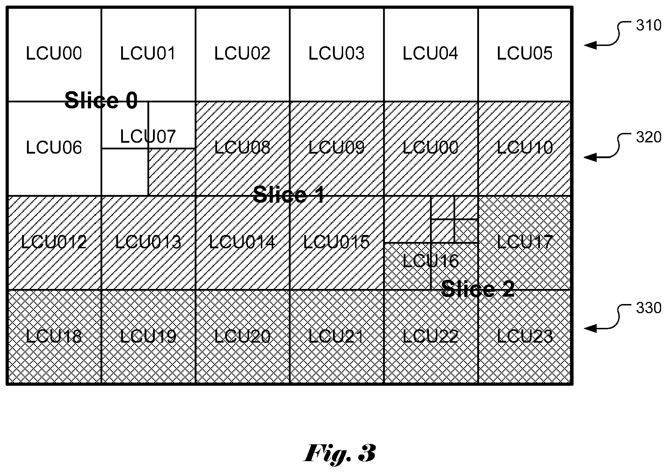

Fig. 3 illustrates an example of slice structure with the fractional LCU partition, where the partition boundaries may run through the LCU. Slice 0, 310 includes LCU00 through LCU06 and terminates at a leaf CU of LCU07. LCU07 is split between slice 0, 310 and slice 1, 320. Slice 1, 320 includes the remaining leaf CUs of LCU07 not included in slice 0, 310 and LCU08 through LCU15, and part of LCU16. Slice 1,320 terminates at a leaf CU of LCU16. LCU16 is split between slice 1, 320 and slice 2, 330. Slice 2, 330 includes the remaining leaf CUs of LCU16 not included in slice 1,320 and LCU17 through LCU23.

In the current HEVC, each LCU has its own quantization parameter (QP) and the QP selected for the LCU is conveyed to the decoder side so that the decoder will use the same QP value for proper decoding process. In order to reduce information associated with QP, the difference between the current coding QP and the reference QP is transmitted instead of the QP value itself. Consequently, the delta QP is transmitted for each LCU, where the delta QP is defined as the difference between the QP of the current coding LCU and the reference QP. If the current LCU is the first LCU in the slice, the slice QP is regarded as the reference QP. Depending on different design options, the reference QP of LCU other than the first LCU in the slice can be the slice QP, a predefined QP value, or the QP of the previous LCU. The delta QP of an LCU is usually the last syntax element of the LCU data. When the prediction mode (PredMode) of the LCU is SKIP mode, the delta QP is not transmitted. Comparing with the macroblock-based coding of AVC/H.264, the coding unit for HEVC can be as large as 64x64 pixels, i.e., the largest CU (LCU) size. Since the LCU is much larger than the macroblock of AVC/H.264, using one delta QP per LCU may cause rate control unable to adapt to the bitrate quickly enough. Consequently there is a need to adopt delta QP in units smaller than the LCU to provide more granular rate control. Furthermore, it is desirable to develop a system that is capable of facilitating more flexible QP processing.

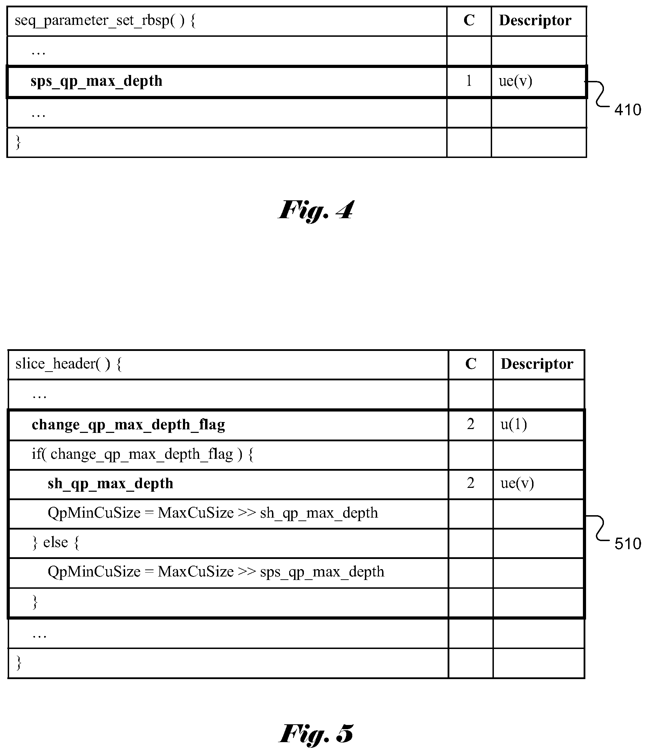

When delta QP is allowed for coding units smaller than LCU, the information associated with delta QP on a per-pixel basis will increase when the coding unit size is decreased. Therefore, a QP minimum CU size is specified so that delta QP will be only transmitted for CUs larger than or equal to the QP minimum CU size. Furthermore, in order to provide flexible delta QP, the QP minimum CU size may be specified at the sequence header, picture header or slice header. For example, a syntax element **sps_qp_max_depth** in the sequence header, SPS is defined as shown in Fig. 4. The additional syntax element required over that of conventional HEVC is indicated by block 410. The **sps_qp_max_depth** syntax element specifies the depth of the QP minimum CU size from the largest CU. Therefore, the QP minimum CU size can be derived from the largest CU size according to **sps_qp_max_depth.** A syntax element specifies the depth of the QP minimum CU size in the picture header can also be specified similarly. In each slice header, another syntax element, **sh_qp_max_depth** is defined as shown in Fig. 5. The additional syntax elements required over those of conventional HEVC are indicated by block 510. The **sh_qp_max_depth** syntax element specifies the depth of the QP minimum CU size, QpMinCuSize, from the largest CU, and the QpMinCuSize can be derived from the largest CU size according to **sh_qp_max_depth.** For each slice, either the QP minimum CU size identified in the sequence level or in the slice level can be chosen as the QpMinCuSize for the current slice. The **change**_**qp**_**max_depth _flag** syntax element as shown in block 510 is used to indicate the selection of the QP minimum CU size from either the sequence level or the slice level. For example, a **change_qp_max_depth_flag** value equal to 0 denotes that the minimum CU size for sending a delta QP is derived from **sps_qp_max_depth.** A **change**_**qp**_**max**_**depth_flag** value equal to 1 denotes that the minimum CU size for sending a delta QP is derived from **sh_qp_max_depth.** The general rule for transmitting delta QP is described as follows. For a leaf CU that is larger than or equal to QpMinCuSize, one delta QP is transmitted. For multiple leaf CUs that are all smaller than QpMinCuSize and have the same parent CU with size equal to QpMinCuSize, one delta QP is transmitted for the multiple leaf CUs to share the QP information. When non-LCU-aligned slices are used, one delta QP is always transmitted for the first leaf CU of the slice regardless of the size of the first leaf CU.

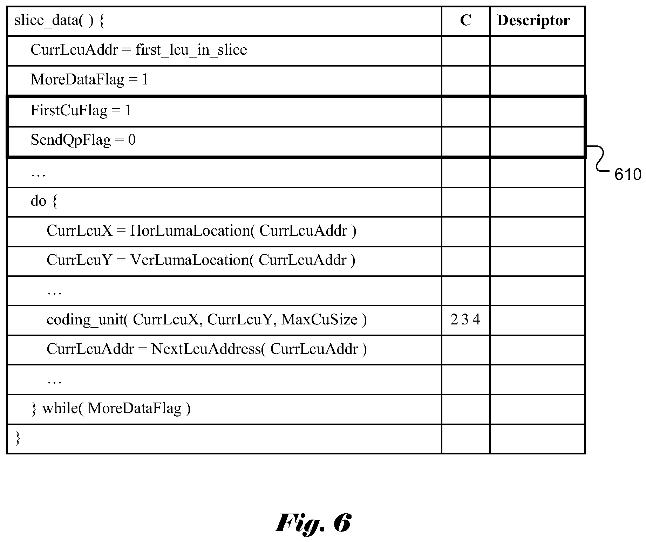

Exemplary slice data syntax associated with delta quantization parameter processing according to the present invention is shown in Fig. 6. The additional syntax elements required over those of conventional HEVC are indicated by block 610. The FirstCuFlag syntax element is a flag used to indicate whether the CU is the first CU in the slice. FirstCuFlag is initialized to 1 in block 610. The SendQpFlag syntax element is a flag used to indicate whether a delta QP is transmitted for the CU and is initialized to 0 in block 610. The subsequent execution of the coding _unit() routine may cause the values of FirstCuFlag and SendQpFlag altered. After a delta QP is transmitted for the first CU in the slice, FirstCuFlag will be reset to 0 in the coding _unit() routine.

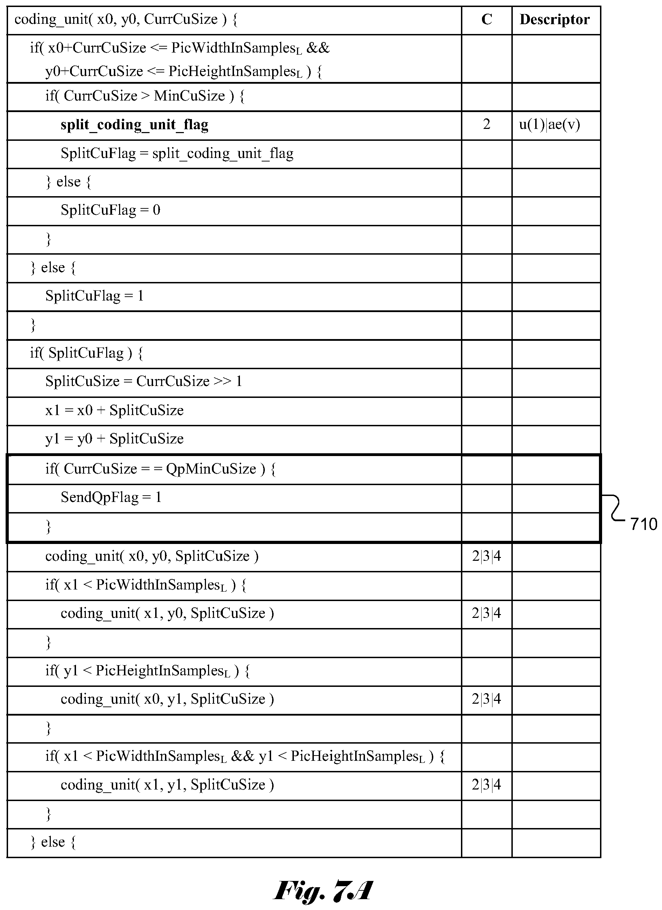

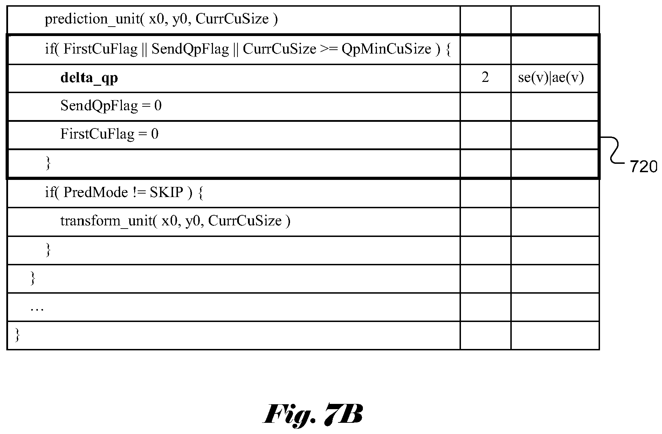

Exemplary coding unit syntax associated with delta quantization parameter processing according to the present invention is shown in Figs. 7A and 7B. The additional syntax elements required over those of conventional HEVC are indicated by blocks 710 and 720. In block 710, the SendQpFlag is reset to 1 to indicate the need to send one delta QP if the current CU size, CurrCuSize, is the same as the QP minimum CU size, QpMinCuSize. In block 720, three conditions are tested: whether the current CU is the first CU in the slice, FirstCuFlag; whether SendQpFlag is set; and whether the CurrCuSize is the same as the QpMinCuSize. If any of the three conditions is asserted, the delta QP, **delta_qp,** is transmitted and both SendQpFlag and FirstCuFlag are reset to 0. The embodiment according to the present invention via the syntax elements shown in Fig. 4 through Fig. 7B allows delta QP processing based on units smaller than the LCU and also provides delta QP processing for a system having fractional LCU. Furthermore, embodiment according to the present invention via the syntax elements shown in Fig. 4 through Fig. 7B allows the system to adaptively select the QP minimum CU size indicated in the sequence/picture header or in the slice header.

While the syntax design in Fig. 4 through 7B illustrates an embodiment according to the present invention, the particular syntax elements are used as examples to practice the present invention and a skilled person in the field may modify the syntax elements to practice the same present invention. According to syntax elements illustrated in Fig. 4 through 7B, a decoder may derive required QP information for decoding the bitstream. For example, a decoder may extract the **change**_**qp**_**max**_**depth_flag** syntax element to determine whether the QP minimum CU size is indicated in the slice header or the sequence header. Consequently, the QP minimum CU size can be determined. The size of a leaf CU can be decoded from the bitstream and the order of the leaf CU in the slice can be determined. If the leaf CU size is greater than or equal to the QP minimum CU size, or the leaf CU is the first CU in a non-LCU-aligned slice, a delta QP exists in the coding unit data. The decoder can extract the delta QP value accordingly and apply the delta QP to the coding unit data for decoding the coding unit.

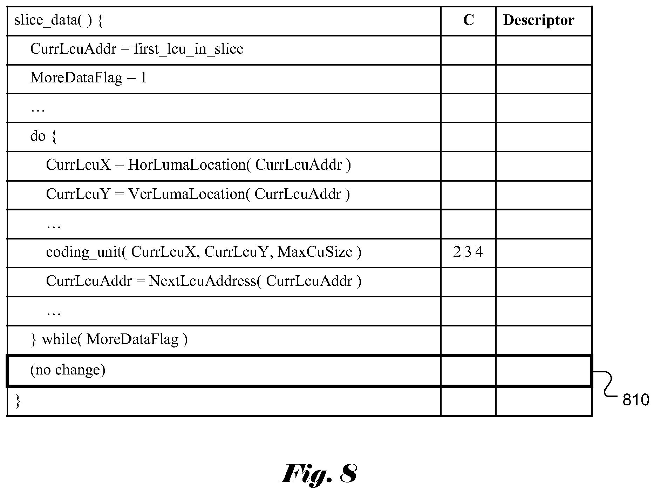

While the QP processing described above allows the QP change at a finer granular level than the LCU and adaptively selects the QP minimum CU size indicated in the sequence header or in the slice header, there is room for further improving the efficiency of transmission associated with quantization parameter information. Accordingly, a first alternative embodiment of the present invention is described as follows. When one delta QP is sent, it is possible that the region covered by the delta QP does not have any nonzero quantized transform coefficient. Since the QP is used for quantizing nonzero transform coefficients and de-quantizing nonzero transform coefficients, there is no need for transmitting QP or delta QP for the region that does not have any nonzero quantized transform coefficient. Consequently, information associated with delta QP or QP can be saved for these regions. In order to support this feature, syntax modifications are made for coding_unit()and transform_unit(), and in order to simplify the illustration, only LCU-aligned slice is taken as an example. The syntax for sequence header and slice header stay the same as those shown in Figs. 4 and 5. The syntax for slice_data() is the same as the conventional HEVC as shown in Fig. 8, where the initialization of the FirstCuFlag and SendQpFlag as shown in Fig. 6 is not performed for LCU-aligned slices, but for non-LCU-aligned slices, the initialization of the FirstCuFlag is required to handle the first leaf CU with at least one non-zero coefficient in the slice. According to the alternative embodiment, the coding_unit() syntax is modified so that a delta QP may exist only at the end of a leaf CU with size larger than or equal to QpMinCuSize or only after the last leaf CU of a split CU with size equal to QpMinCuSize. Furthermore, the transform_unit() syntax associated with the delta QP is modified so that a delta QP is sent only when the corresponding region has at least one nonzero quantized transform coefficient. The condition of at least one nonzero quantized transform coefficient in a region can be detected based on prediction mode (PredMode), coded block pattern (CBP), coded block flag (CBF), or a combination of PredMode, CBP, and CBF. For example, when PredMode is SKIP, it implies that there is no residue existing in the leaf CU. When VLC is used and CBP is zero, it implies that there is no residue existing in the leaf CU. When CABAC is used and CBF is zero, it again implies that there is no residue existing in the leaf CU. QP information can be omitted for those leaf CUs to improve the coding and transmission efficiency.

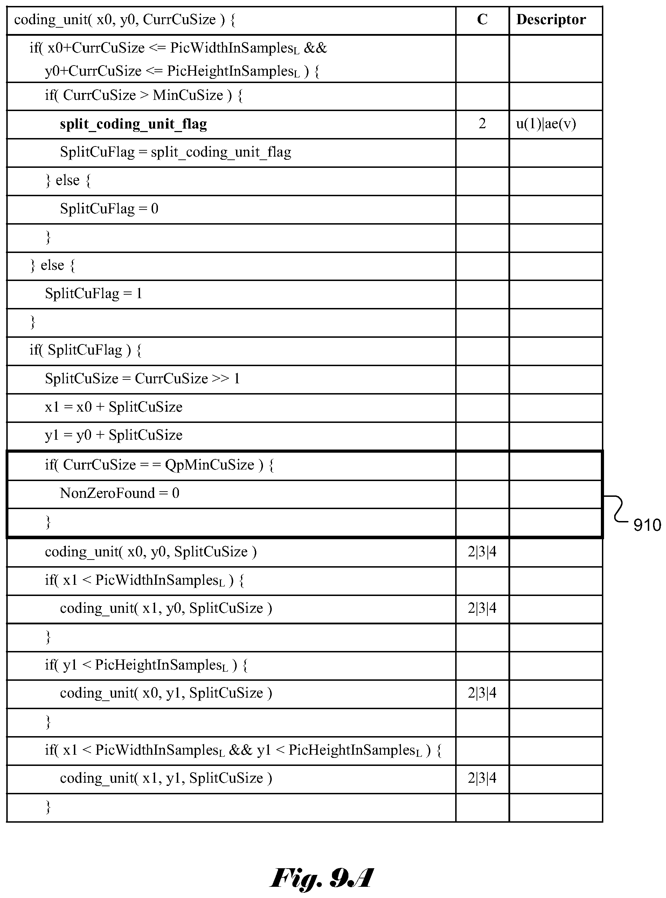

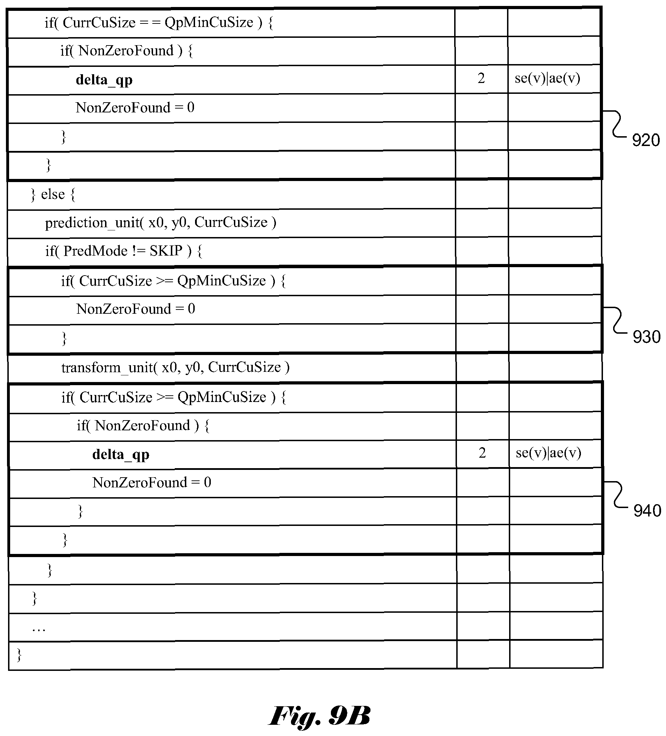

To support the above alternative embodiment, the coding_unit() syntax modifications are indicated by blocks 910 through 940 as shown in Fig. 9A and Fig. 9B. In block 910, when CurrCuSize is the same as QpMinCuSize, the NonZeroFound is set to 0. The subsequent coding_unit() routine is then executed in a recursive fashion, where the NonZeroFound value may be alternated. In the processing shown in block 920, if CurrCuSize is the same as QpMinCuSize, the NonZeroFound value is checked. If NonZeroFound has a value of 1, **delta_qp** is sent. After the prediction_unit() routine is called and if PredMode is not SKIP, the block 930 is performed. In block 930, if CurrCuSize is larger than or equal to QpMinCuSize, the NonZeroFound is set to 0. The subsequent transform_unit() routine is then executed, where the NonZeroFound value may be alternated. After the transform_unit() routine is called, the block 940 is performed. In the processing shown in block 940, if CurrCuSize is larger than or equal to QpMinCuSize, the NonZeroFound value is tested. If NonZeroFound has a value of 1, **delta_qp** is sent.

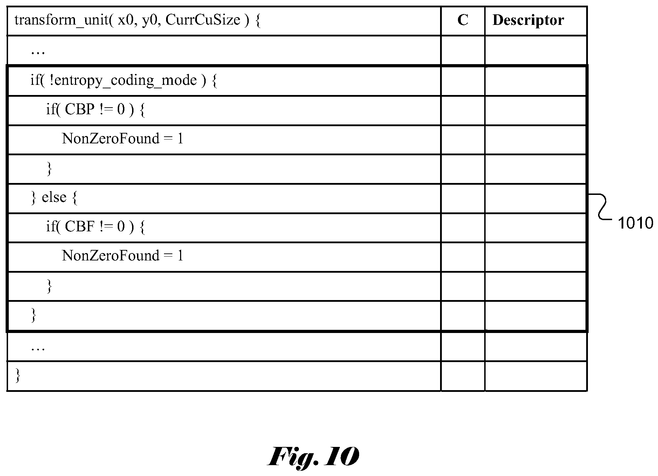

To support the above alternative embodiment, the transform_unit() syntax modifications are shown in block 1010 of Fig. 10. When VLC is used and if CBP is not zero, it implies at least one nonzero transform coefficient existing in the leaf CU and NonZeroFound is set to 1. Otherwise, when VLC is used and CBP is zero, NonZeroFound has the same value as before, i.e., 0. When CABAC is used and CBF is not zero, it implies at least one nonzero transform coefficient existing in the leaf CU and NonZeroFound is set to 1. Otherwise, when CABAC is used and CBF is zero, NonZeroFound has the same value as before, i.e., 0.

To support the above alternative embodiment, the sequence head and slice header syntax stays the same as those in Fig. 4 and Fig. 5. As before, the **sps_qp_max_depth** syntax element in the sequence head specifies the depth of the QP minimum CU size from the largest CU. In each slice header, the **sh_qp_max_depth** syntax element specifies the depth of QP minimum CU size from the largest CU. The **change_qp_max_depth_flag** syntax element as shown in block 510 is used to indicate the selection of the QP minimum CU size, QpMinCuSize, from either the sequence level or the slice level. For example, a **change_qp_max_depth_flag** value equal to 0 denotes that the minimum CU size for sending QP is derived from **sps_qp_max_depth**. A **change_qp_max_depth_flag** value equal to 1 denotes that the minimum CU size for sending QP is derived from **sh_qp_max_depth.** For a leaf CU that is larger than or equal to QpMinCuSize, one delta QP is transmitted when the leaf CU has at least one nonzero quantized transform coefficient. For multiple leaf CUs that are all smaller than QpMinCuSize and have the same parent CU of size equal to QpMinCuSize, one delta QP is transmitted when these leaf CUs have at least one nonzero quantized transform coefficient. According to the alternative embodiment, a leaf CU that is larger than or equal to QpMinCuSize, one delta QP is transmitted when the leaf CU has at least one nonzero quantized transform coefficient. In other words, the delta QP is not transmitted if there is no nonzero quantized transform coefficient. Furthermore, for multiple leaf CUs that are smaller than QpMinCuSize and have the same parent CU of size equal to QpMinCuSize, one delta QP is transmitted for the leaf CUs to share the QP information when these leaf CUs have at least one nonzero quantized transform coefficient. In addition, the detection of nonzero quantized transform coefficient can be based on PredMode, CBP, CBF or any combination of PredMode, CBP, and CBF.

While the syntax design in Figs. 4, 5, 8, 9A, 9B and 10 illustrates an alternative embodiment according to the present invention, the particular syntax elements are used as examples to practice the present invention and a skilled person in the field may modify the syntax elements to practice the same present invention. According to the exemplary syntax elements, a decoder may derive required QP information for decoding the bitstream. For example, a decoder may extract the **change**_**qp**_**max_depth_flag** syntax element to determine whether the QP minimum CU size is indicated in the slice header or the sequence header. Consequently, the QP minimum CU size can be determined. The size of a leaf CU can be decoded from the bitstream and the order of the leaf CU in the slice can be determined. If the leaf CU size is greater than or equal to the QP minimum CU size, the NonZeroFound value is checked. If NonZeroFound has a value of 0, it implies no nonzero transform coefficients in the leaf CU and the transform coefficients of the leaf CU are all set to 0. If NonZeroFound has a value of 1, a delta QP exists in the coding unit data. The decoder can extract the delta QP accordingly and apply the delta QP to the coding unit data for decoding the coding unit.

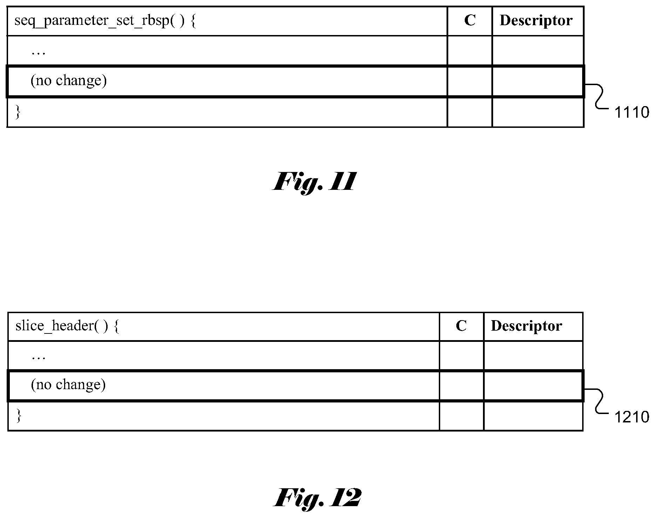

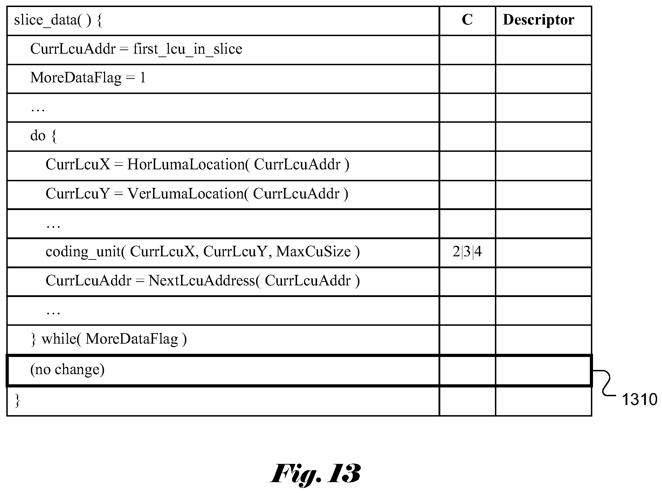

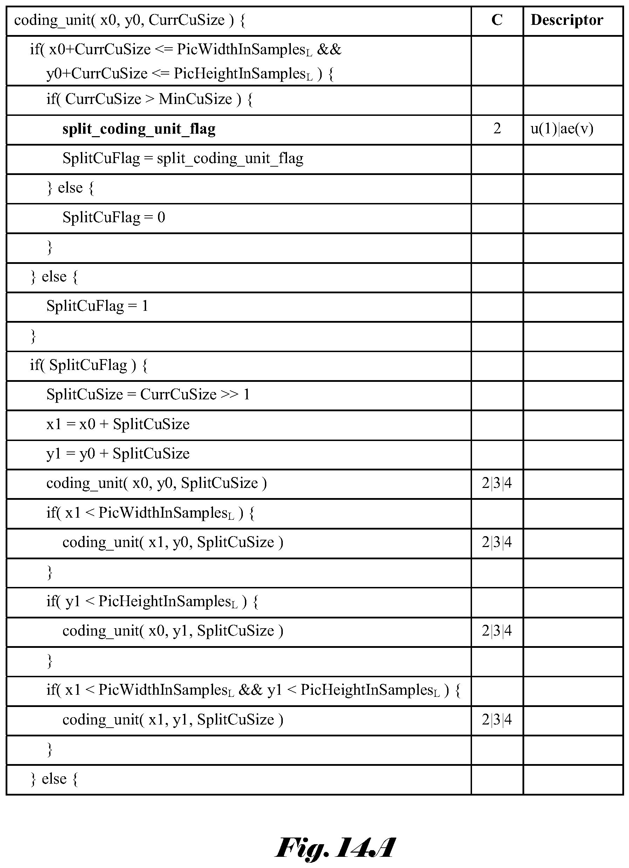

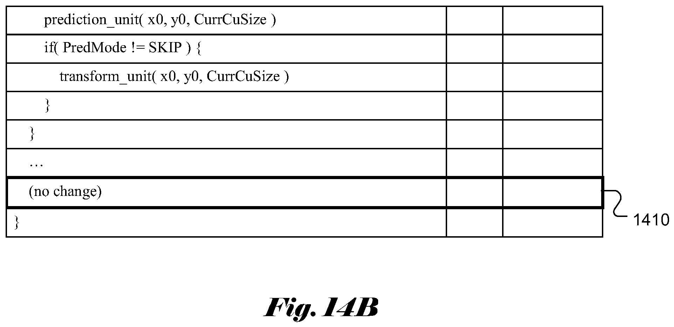

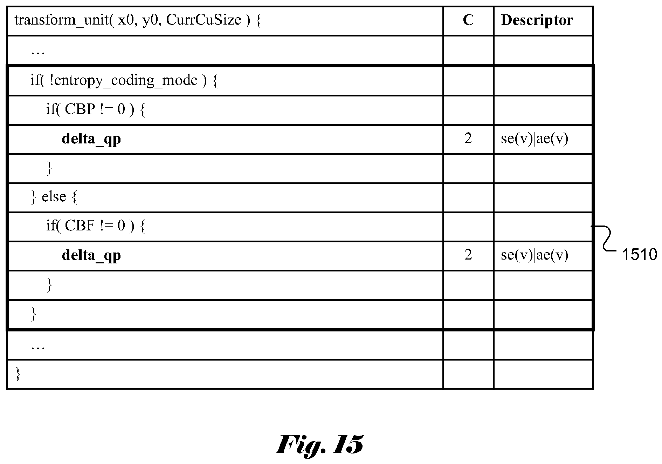

In a second alternative embodiment according the present invention, delta QP for each leaf CU, which has nonzero quantized transform coefficients, is explicitly transmitted or derived implicitly base on the information of at least one other leaf CU belonging to the same LCU. The condition of nonzero quantized transform coefficients in the leaf CU can be derived based on PredMode, CBF, CBP, or a combination of the above. For example, if the leaf CU prediction mode, PredMode is not SKIP and the coded block pattern, CBP, in case of VLC, or the coded block flag, CBF, in case of CABAC is nonzero, the leaf CU contains at least one nonzero transform coefficient. In the following, we only take the case of transmitting delta QP information explicitly for the leaf CU which has nonzero quantized transform coefficients as an example. The required syntax to support the second alternative embodiment is shown in Figs. 11 through 15. The sequence header in Fig. 11, the slice header in Fig. 12, the slice_data() syntax in Fig. 13, and the coding_unit() syntax in Figs. 14A and 14B are the same as those for the conventional HEVC. The required transform_unit() syntax modifications from the conventional HEVC are indicated in block 1510 as shown in Fig. 15. As shown in block 1510, when VLC is used and CBP is non-zero, a delta QP is transmitted. Also, when CABAC is used and CBF is non-zero, a delta QP is transmitted. According to the second alternative embodiment, each leaf CU can have its own quantization parameter and the quantization parameter information is sent only if the leaf CU has at least one nonzero quantized transform coefficient.

While the syntax design in Figs. 11 through 15 illustrates the second alternative embodiment according to the present invention, the particular syntax elements are used as examples to practice the present invention and a skilled person in the field may modify the syntax elements to practice the same present invention. According to the exemplary syntax elements, a decoder may derive required QP information for decoding a leaf CU in the video bitstream if the leaf CU has at least one nonzero quantized transform coefficient. For example, if VLC is used and if the coded block pattern, CBP, of a leaf CU is non-zero, the decoder obtains QP information such as a delta QP explicitly from the video bitstream or implicitly from information of at least another leaf CU belonging to the same Largest Coding Unit (LCU). The decoder can extract the delta QP accordingly and apply the delta QP to the coding unit data for decoding. If VLC is used and if the CBP is zero, it indicates that the transform coefficients of the leaf CU are all 0. Similarly, if CABAC is used and if the coded block flag, CBF, is non-zero, a delta QP exists. The decoder can extract the delta QP accordingly and apply the delta QP to the coding unit data for decoding. If CABAC is used and if the CBF is zero, it indicates that the transform coefficients of the leaf CU are all 0.

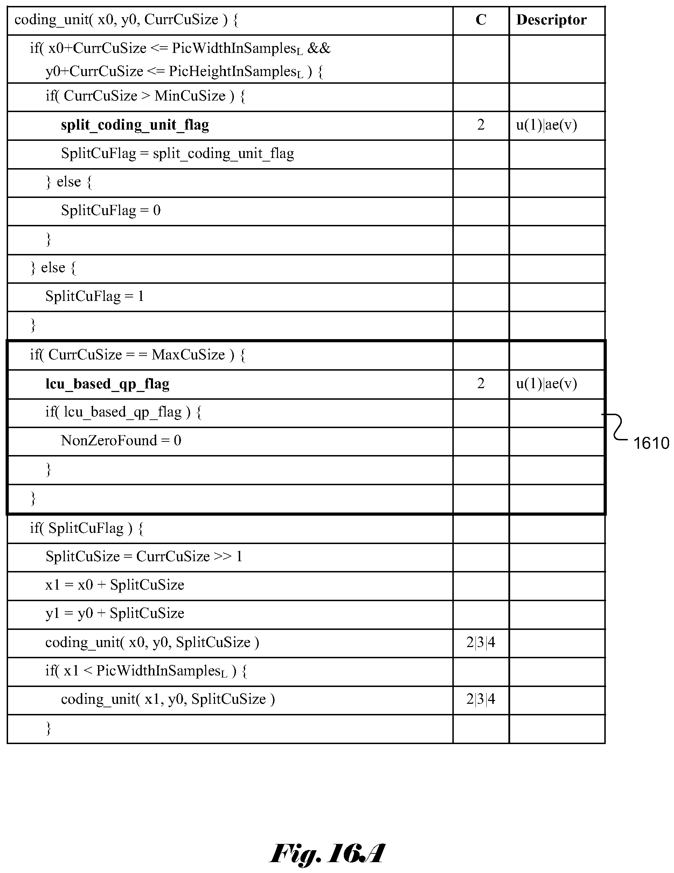

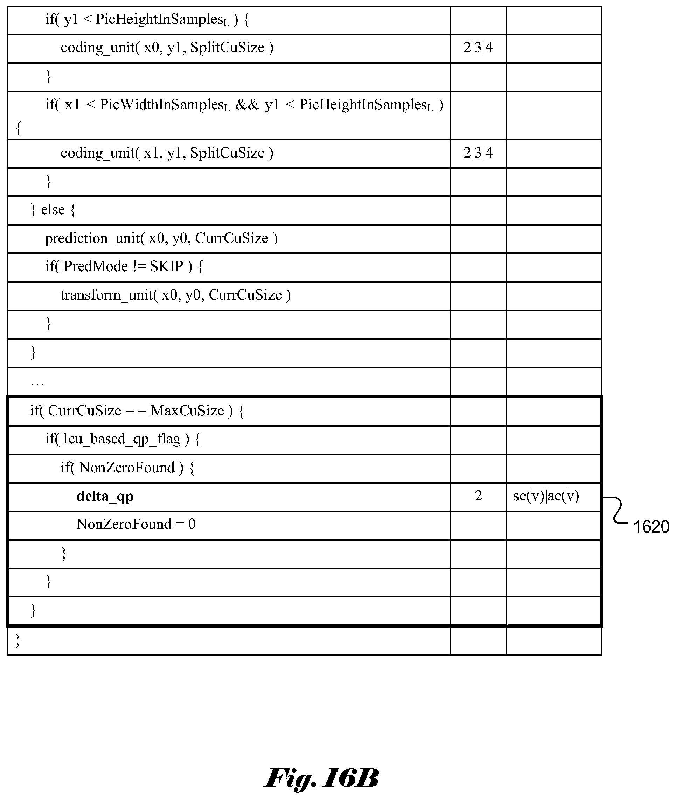

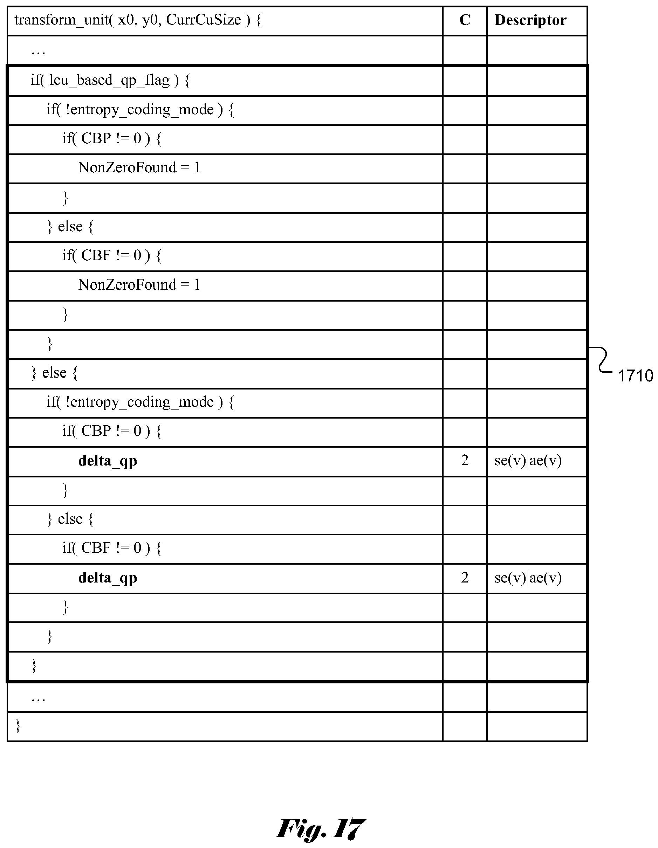

In a third alternative embodiment according to the present invention, the coding system may switch between two modes of quantization parameter processing. In a first mode, the coding system uses one delta QP per LCU if the LCU has at least one nonzero quantized transform coefficient. In a second mode, the coding system uses one delta QP per leaf CU if the leaf CU has at least one nonzero quantized transform coefficient. To support the third alternative embodiment, the same sequence header syntax, slice header syntax, and slice_data() syntax as the conventional HEVC can be used. The coding_unit() syntax modifications are indicated by blocks 1610 and 1620 as shown in Fig. 16A and Fig. 16B. In block 1610, **lcu_based_qp_flag** is incorporated to indicate whether LCU based QP is used if the current CU has the same size as LCU. If **lcu_based_qp_flag** is set, NonZeroFound is reset to 0. After the subsequent transform_unit() routine is executed, the NonZeroFound value may be altered. As shown in block 1620, if the current CU has the same size as LCU, the syntax element, the l**cu_based_qp_flag** value is checked. If **lcu_based _qp_flag** has a value of 1, the NonZeroFound value is checked. If NonZeroFound has a value of 1, **delta_qp** is incorporated and NonZeroFound is reset to 0. The required transform_unit() syntax modifications from the conventional HEVC are indicated in block 1710 as shown in Fig. 17. As shown in block 1710, when **lcu_based_qp_flag** has a value of 1, the first two conditions of if VLC is used and if coded block pattern, CBP, is non-zero are tested. If the first two conditions are satisfied, then NonZeroFound is set to 1. Furthermore, the second two conditions of if CABAC is used and if coded block flag, CBF, is non-zero are also tested. If the second two conditions are satisfied, then NonZeroFound is set to 1. If neither the first two conditions nor the second two conditions are satisfied, the value for NonZeroFound remains the same as before, i.e., 0. When **lcu_based_qp_flag** is not set, the third two conditions of if VLC is used and if CBP is non-zero are tested. If the third two conditions are satisfied, then a delta QP is transmitted. Furthermore, the fourth two conditions of if CABAC is used and if CBF is non-zero are tested. If the fourth two conditions are satisfied, then a delta QP is also transmitted. According to the third alternative embodiment, in the first mode, each LCU can have its own quantization parameter and the quantization parameter information is sent only if the LCU has at least one nonzero quantized transform coefficient. In the second mode, each leaf CU can have its own quantization parameter and the quantization parameter information is sent only if the leaf CU has at least one nonzero quantized transform coefficient.

While the syntax design in Figs. 16A, 16B and 17 illustrates the third alternative embodiment according to the present invention, the particular syntax elements are used as examples to practice the present invention and a skilled person in the field may modify the syntax elements to practice the same present invention. According to the exemplary syntax elements, a decoder may derive required QP information for decoding the bitstream. For example, the decoder can check if **lcu_based_qp_flag** is set. If **lcu_based_qp_flag** is set, the decoder checks if NonZeroFound is set. If NonZeroFound is set, the decoder extracts QP information such as the delta QP accordingly and applies the delta QP to the LCU. If NonZeroFound is not set, it implies that there is no nonzero transform coefficient in the LCU. When **lcu_based_qp_flag** is not set, the decoder checks the conditions of if VLC is used and if coded block pattern, CBP, is non-zero. If the conditions are satisfied, the decoder extracts the QP information such as the delta QP accordingly and applies the delta QP to the leaf CU for decoding. The decoder also checks the conditions of if CABAC is used and if coded block flag CBF, is non-zero. If the conditions are satisfies, the decoder extracts the QP information such as the delta QP accordingly and applies the delta QP to the leaf CU for decoding. If VLC is used and CBP is zero, the transform coefficients of the leaf CU are all set to 0. Similarly, if CABAC is used and CBF is zero, the transform coefficients of the leaf CU are all set to 0. The invention may be embodied in hardware such as integrated circuits (IC) and application specific IC (ASIC), software and firmware codes associated with a processor implementing certain functions and tasks of the present invention, or a combination of hardware and software/firmware. The described examples are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A method for coding of video pictures, wherein each of the video pictures is partitioned into LCUs (largest coding units) and each LCU is partitioned by quadtree partitioning into smaller CUs (coding units) and results in one or more leaf CUs, each leaf CU is subject to further split into prediction unit (PU) for prediction,
the method comprising:
receiving a current leaf CU;
determining a QP (Quantization Parameter) minimum CU size, wherein the QP minimum CU size is specified so that QP information is only transmitted for leaf CUs larger than or equal to the QP minimum CU size, and the QP minimum CU size is specified at a sequence header, picture header or slice header;
determining the leaf CU size;
if leaf CU size of the current leaf CU is larger than or equal to the QP minimum CU size and if said current leaf CU has at least one nonzero quantized transform coefficient, transmitting QP information associated with the current leaf CU in a bitstream;
if the leaf CU size of the current leaf CU is smaller than the QP minimum CU size and multiple leaf CUs including the current leaf CU have a parent CU of size equal to the QP minimum CU, transmitting QP information for the multiple leaf CUs to share when these leaf CUs have at least one nonzero quantized transform coefficient; and
incorporating the QP information for the current leaf CU regardless of the size of the current leaf CU if the current leaf CU is the first one of coding units in a slice when non LCU aligned slices are used.

2. The method of claim 1, wherein at least two respective syntax elements are incorporated in a combination of sequence level, picture level, and slice level to signal corresponding QP minimum CU sizes in the combination of sequence level, picture level, and slice level.

3. The method of claim 1, wherein the QP minimum CU size is selected from said at least two respective syntax elements incorporated in the combination of sequence level, picture level, and slice level.

4. The method of claim 1, wherein said at least one nonzero quantized transform coefficient is detected according to Prediction Mode (PredMode), Coded Block Pattern (CBP), Coded Block Flag (CBF), or a combination of PredMode, CBP, and CBF.

5. The method of claim 1, wherein the QP minimum CU size is derived from a largest CU size.

6. The method of claim 5, wherein a syntax element qp_max_depth specifies a depth of the QP minimum CU size from the largest CU size.

7. The method of claim 6, wherein the syntax element qp_max_depth is incorporated in the sequence header, picture header or slice header.

8. A method for decoding of a video bitstream corresponding to video pictures, wherein each of the video pictures is partitioned into LCUs (largest coding units), each LCU is partitioned by quadtree partitioning into smaller CUs and results in multiple leaf CUs,
the method comprising:
receiving coded data associated with a current leaf CU, wherein the current leaf CU is generated by a quadtree partitioning;
determining a QP (Quantization Parameter) minimum CU size from the video bitstream, wherein the QP minimum CU size is specified so that QP information is only transmitted for leaf CUs larger than or equal to the QP minimum CU size, and the QP minimum CU size is specified at a sequence header, picture header or slice header;
determining leaf CU size for the current leaf CU from the video bitstream;
when the leaf CU size is larger than or equal to the QP minimum CU size, detecting whether the current leaf CU has at least one nonzero quantized transform coefficient,
if the leaf CU size is larger than or equal to the QP minimum CU size and if the current leaf CU has at least one nonzero quantized transform coefficient, parsing QP information associated with the current leaf CU from the coded data in the video bitstream;
if the leaf CU size is smaller than the QP minimum CU size, determining QP information for the current leaf CU based on previously received QP information; and
a step of parsing the QP information for the current leaf CU regardless of the size of the current leaf CU if the current leaf CU is the first one of coding units in a slice when non LCU aligned slices are used;
wherein if the leaf CU size is smaller than the QP minimum CU size, the method further comprises a step of parsing the QP information for the current leaf CU and at least another leaf CU to share the QP information if parent CU size of the current leaf CU and said at least another leaf CU is equal to the QP minimum CU size when these leaf CUs have at least one nonzero quantized transform coefficient.

9. The method of claim 8, wherein the QP minimum CU size is indicated by a first flag in slice level or in sequence and/or picture level.

10. The method of claim 8, wherein the QP information for the current leaf CU is explicitly obtained from the video bitstream.

11. The method of claim 8, wherein the QP minimum CU size is derived from a largest CU size.

12. The method of claim 11, wherein determining the QP minimum CU size from the video bitstream further comprises determining a syntax element qp_max_depth from the video bitstream, and the syntax element qp_max_depth specifies a depth of the QP minimum CU size from the largest CU size.

13. The method of claim 12, wherein the syntax element qp_max_depth is at the sequence header, picture header or slice header.

## Patentansprüche

1. Verfahren zum Codieren von Videobildern, wobei jedes der Videobilder in LCUs (größte Codierungseinheiten) unterteilt ist und jede LCU durch Quadtree-Unterteilung in kleinere CUs (Codierungseinheiten) unterteilt ist, wodurch eine oder mehrere Basis-CUs resultieren, wobei jede Basis-CU einer weiteren Teilung in Vorhersageeinheiten (PU) für eine Vorhersage unterliegt,
wobei das Verfahren aufweist:
Empfangen einer aktuellen Basis-CU;
Bestimmen einer QP- (Quantisierungsparameter-) Minimal-CU-Größe, wobei die QP-Minimal-CU-Größe so spezifiziert ist, dass QP-Informationen nur für Basis-CUs übertragen werden, die größer oder gleich der QP-Minimal-CU-Größe sind, und die QP-Minimal-CU-Größe in einer Sequenz-Kopfzeile, Bild-Kopfzeile oder Slice-Kopfzeile spezifiziert ist;
Bestimmen der Basis-CU-Größe;
wenn die Basis-CU-Größe der aktuellen Basis-CU größer oder gleich der QP-Minimal-CU-Größe ist, und wenn die aktuelle Basis-CU mindestens einen quantisierten Transformationskoeffizienten aufweist, der nicht null ist, Übertragen von QP-Informationen, die mit der aktuellen Basis-CU zusammenhängen, in einem Bitstrom;
wenn die Basis-CU-Größe der aktuellen Basis-CU kleiner ist als die QP-Minimal-CU-Größe und mehrere Basis-CUs einschließlich der aktuellen Basis-CU eine Ausgangs-CU einer Größe gleich der QP-Minimal-CU aufweisen, Übertragen von QP-Informationen gemeinsam für die mehreren Basis-CUs, wenn diese Basis-CUs mindestens einen quantisierten Transformationskoeffizienten aufweisen, der nicht null ist; und
Einbinden der QP-Informationen für die aktuelle Basis-CU unabhängig von der Größe der aktuellen Basis-CU, wenn die aktuelle Basis-CU die erste von Codierungseinheiten in einer Slice ist, wenn Slices verwendet werden, die nicht LCUausgerichtet sind.

2. Verfahren gemäß Anspruch 1, wobei mindestens zwei jeweilige Syntaxelemente in einer Kombination einer Sequenzebene, Bildebene und Slice-Ebene enthalten sind, um korrespondierende QP-Minimal-CU-Größen in der Kombination von Sequenzebene, Bildebene und Slice-Ebene anzuzeigen.

3. Verfahren gemäß Anspruch 1, wobei die QP-Minimal-CU-Größe von den mindestens zwei jeweiligen Syntaxelementen ausgewählt wird, die in der Kombination von Sequenzebene, Bildebene und Slice-Ebene enthalten sind.

4. Verfahren gemäß Anspruch 1, wobei der mindestens eine quantisierte Transformationskoeffizient, der nicht null ist, gemäß der Vorhersagebetriebsart (PredMode), dem codierten Blockmuster (CBP), dem codierten Blockanzeiger (CBF) oder einer Kombination aus PredMode, CBP und CBF erfasst wird.

5. Verfahren gemäß Anspruch 1, wobei die QP-Minimal-CU-Größe von einer größten CU-Größe hergeleitet wird.

6. Verfahren gemäß Anspruch 5, wobei ein Syntaxelement qp_max_depth eine Tiefe der QP-Minimal-CU-Größe von der größten CU-Größe spezifiziert.

7. Verfahren gemäß Anspruch 6, wobei das Syntaxelement qp_max_depth in der Sequenz-Kopfzeile, der Bild-Kopfzeile oder der Slice-Kopfzeile enthalten ist.

8. Verfahren zum Decodieren eines Videobitstroms, der zu Videobildern korrespondiert, wobei jedes der Videobilder in LCUs (größte Codierungseinheiten) unterteilt ist, jede LCU durch Quadtree-Unterteilung in kleinere CUs unterteilt ist, wodurch mehrere Basis-CUs resultieren,
wobei das Verfahren aufweist:
Empfangen von codierten Daten, die mit einer aktuellen Basis-CU zusammenhängen, wobei die aktuelle Basis-CU durch eine Quadtree-Unterteilung generiert wird;
Bestimmen einer QP- (Quantisierungsparameter-) Minimal-CU-Größe von dem Videobitstrom, wobei die QP-Minimal-CU-Größe so spezifiziert ist, dass QP-Informationen nur für Basis-CUs übertragen werden, die größer oder gleich der QP-Minimal-CU-Größe sind, und die QP-Minimal-CU-Größe in einer Sequenz-Kopfzeile, Bild-Kopfzeile oder Slice-Kopfzeile spezifiziert ist;
Bestimmen der Basis-CU-Größe für die aktuelle Basis-CU von dem Videobitstrom;
wenn die Basis-CU-Größe größer oder gleich der QP-Minimal-CU-Größe ist, Erfassen, ob die aktuelle Basis-CU mindestens einen quantisierten Transformationskoeffizienten aufweist, der nicht null ist;
wenn die Basis-CU-Größe größer oder gleich der QP-Minimal-CU-Größe ist, und wenn die aktuelle Basis-CU mindestens einen quantisierten Transformationskoeffizienten aufweist, der nicht null ist, Analysieren der QP-Informationen von den codierten Daten in dem Videobitstrom, die mit der aktuellen Basis-CU zusammenhängen;
wenn die Basis-CU-Größe kleiner ist als die QP-Minimal-CU-Größe, Bestimmen der QP-Informationen für die aktuelle Basis-CU basierend auf vorher empfangenen QP-Informationen; und
einen Schritt eines Analysierens der QP-Informationen für die aktuelle Basis-CU unabhängig von der Größe der aktuellen Basis-CU, wenn die aktuelle Basis-CU die erste von Codierungseinheiten in einer Slice ist, wenn Slices verwendet werden, die nicht LCUausgerichtet sind;
wobei, wenn die Basis-CU-Größe kleiner ist als die QP-Minimal-CU-Größe, das Verfahren weiter einen Schritt eines Analysierens der QP-Informationen für die aktuelle Basis-CU und mindestens eine andere Basis-CU aufweist, um die QP-Informationen zu teilen, wenn eine Größe einer Ausgangs-CU der aktuellen Basis-CU und der mindestens einen anderen Basis-CU gleich der QP-Minimal-CU-Größe ist, wenn diese Basis-CUs mindestens einen quantisierten Transformationskoeffizienten aufweisen, der nicht null ist.

9. Verfahren gemäß Anspruch 8, wobei die QP-Minimal-CU-Größe durch einen ersten Anzeiger in einer Slice-Ebene oder in einer Sequenz- und/oder Bildebene angezeigt wird.

10. Verfahren gemäß Anspruch 8, wobei die QP-Informationen für die aktuelle Basis-CU explizit von dem Videobitstrom erhalten werden.

11. Verfahren gemäß Anspruch 8, wobei die QP-Minimal-CU-Größe von einer größten CU-Größe hergeleitet wird.

12. Verfahren gemäß Anspruch 11, wobei das Bestimmen der QP-Minimal-CU-Größe von dem Videobitstrom weiter ein Bestimmen eines Syntaxelements qp_max_depth von dem Videobitstrom aufweist, und das Syntaxelement qp_max_depth eine Tiefe der QP-Minimal-CU-Größe von der größten CU-Größe spezifiziert.

13. Verfahren gemäß Anspruch 12, wobei sich das Syntaxelement qp_max_depth in der Sequenz-Kopfzeile, der Bild-Kopfzeile oder der Slice-Kopfzeile befindet.

## Revendications

1. Procédé de codage d'images vidéo, dans lequel chacune des images vidéo est partitionnée en des LCU (les plus grandes unités de codage) et chaque LCU est partitionnée par un partitionnement par arbre quaternaire en de plus petites CU (unités de codage) et permet d'obtenir une ou plusieurs CU feuille(s), chaque CU feuille est soumise à une autre division en une unité de prédiction (PU) pour une prédiction,
le procédé comprenant le fait :
de recevoir une CU feuille actuelle ;
de déterminer une taille de CU minimale de QP (Paramètre de Quantification), où la taille de CU minimale de QP est spécifiée de sorte que les informations QP soient transmises uniquement pour des CU feuilles supérieures ou égales à la taille de CU minimale de QP, et la taille de CU minimale de QP est spécifiée à un en-tête de séquence, un en-tête d'image ou un en-tête de tranche ;
de déterminer la taille de CU feuille ;
si une taille de CU feuille de la CU feuille actuelle est supérieure ou égale à la taille de CU minimale de QP et si ladite CU feuille actuelle a au moins un coefficient de transformation quantifié non nul, de transmettre des informations QP associées à la CU feuille actuelle dans un train de bits ;
si la taille de CU feuille de la CU feuille actuelle est inférieure à la taille de CU minimale de QP et de multiples CU feuilles comportant la CU feuille actuelle ont une CU parent de taille égale à celle de la CU minimale de QP, de transmettre des informations QP pour les multiples CU feuilles à partager lorsque ces CU feuilles ont au moins un coefficient de transformation quantifié non nul ; et
d'incorporer les informations QP pour la CU feuille actuelle indépendamment de la taille de la CU feuille actuelle si la CU feuille actuelle est la première unité des unités de codage dans une tranche lorsque des tranches à LCU non alignées sont utilisées.

2. Procédé de la revendication 1, dans lequel au moins deux éléments de syntaxe respectifs sont incorporés dans une combinaison de niveau de séquence, de niveau d'image, et de niveau de tranche pour signaler des tailles de CU minimales de QP correspondantes dans la combinaison de niveau de séquence, de niveau d'image, et de niveau de tranche.

3. Procédé de la revendication 1, dans lequel la taille de CU minimale de QP est sélectionnée à partir desdits au moins deux éléments de syntaxe respectifs incorporés dans la combinaison de niveau de séquence, de niveau d'image, et de niveau de tranche.

4. Procédé de la revendication 1, dans lequel ledit au moins un coefficient de transformation quantifié non nul est détecté selon un Mode de Prédiction (PredMode), un Modèle de Bloc Codé (CBP), un Drapeau de Bloc Codé (CBF), ou une combinaison de PredMode, de CBP, et de CBF.

5. Procédé de la revendication 1, dans lequel la taille de CU minimale de QP est dérivée de la plus grande taille de CU.

6. Procédé de la revendication 5, dans lequel une profondeur qp_max d'élément de syntaxe spécifie une profondeur de la taille de CU minimale de QP à partir de la plus grande taille de CU.

7. Procédé de la revendication 6, dans lequel la profondeur qp_max d'élément de syntaxe est incorporée dans l'en-tête de séquence, l'en-tête d'image ou l'en-tête de tranche.

8. Procédé de décodage d'un train de bits vidéo correspondant à des images vidéo, dans lequel chacune des images vidéo est partitionnée en des LCU (les plus grandes unités de codage), chaque LCU est partitionnée par un partitionnement par arbre quaternaire en de plus petites CU et permet d'obtenir de multiples CU feuilles,
le procédé comprenant le fait :
de recevoir des données codées associées à une CU feuille actuelle, où la CU feuille actuelle est générée par un partitionnement par arbre quaternaire ;
de déterminer une taille de CU minimale de QP (Paramètre de Quantification) à partir du train de bits vidéo, où la taille de CU minimale de QP est spécifiée de sorte que des informations QP soient transmises uniquement pour des CU feuilles supérieures ou égales à la taille de CU minimale de QP, et la taille de CU minimale de QP est spécifiée à un en-tête de séquence, un en-tête d'image ou un en-tête de tranche ;
de déterminer une taille de CU feuille pour la CU feuille actuelle à partir du train de bits vidéo ;
lorsque la taille de CU feuille est supérieure ou égale à la taille de CU minimale de QP, de détecter si la CU feuille actuelle a au moins un coefficient de transformation quantifié non nul,
si la taille de CU feuille est supérieure ou égale à la taille de CU minimale de QP et si la CU feuille actuelle a au moins un coefficient de transformation quantifié non nul, d'analyser les informations QP associées à la CU feuille actuelle à partir des données codées dans le train de bits vidéo ;
si la taille de CU feuille est inférieure à la taille de CU minimale de QP, de déterminer des informations QP pour la CU feuille actuelle en se basant sur des informations QP précédemment reçues ; et
d'effectuer une étape d'analyse des informations QP pour la CU feuille actuelle indépendamment de la taille de la CU feuille actuelle si la CU feuille actuelle est la première unité des unités de codage dans une tranche lorsque des tranches à LCU non alignées sont utilisées ;
dans lequel si la taille de CU feuille est inférieure à la taille de CU minimale de QP, le procédé comprend en outre une étape d'analyse des informations QP pour la CU feuille actuelle et au moins une autre CU feuille pour partager les informations QP si une taille de CU parent de la CU feuille actuelle et de ladite au moins une autre CU feuille est égale à la taille de CU minimale de QP lorsque ces CU feuilles ont au moins un coefficient de transformation quantifié non nul.

9. Procédé de la revendication 8, dans lequel la taille de CU minimale de QP est indiquée par un premier drapeau dans un niveau de tranche ou dans un niveau de séquence et/ou d'image.

10. Procédé de la revendication 8, dans lequel les informations QP pour la CU feuille actuelle sont explicitement obtenues à partir du train de bits vidéo.

11. Procédé de la revendication 8, dans lequel la taille de CU minimale de QP est dérivée de la plus grande taille de CU.

12. Procédé de la revendication 11, dans lequel la détermination de la taille de CU minimale de QP à partir du train de bits vidéo comprend en outre le fait de déterminer une profondeur qp_max d'élément de syntaxe à partir du train de bits vidéo, et la profondeur qp_max d'élément de syntaxe spécifie une profondeur de la taille de CU minimale de QP à partir de la plus grande taille de CU.

13. Procédé de la revendication 12, dans lequel la profondeur qp_max d'élément de syntaxe est à l'en-tête de séquence, l'en-tête d'image ou l'en-tête de tranche.
